# EUROPEAN PATENT APPLICATION

(11) **EP 1 661 802 A2**
(43) Date of publication of application: **31.05.2006**
(21) Application number: 05022505.1
(22) Date of filing: 14.10.2005
(51) Int. Cl.: B62M 3/00

(54) **Bicycle crank axle bearing assembly**

(30) Priority: 29.11.2004 JP 2004343935
(71) Applicant: SHIMANO INC., Osaka 590-8577 (JP)
(72) Inventor: Shiraishi, Shingo, Sakai, Osaka, 599-8273 (JP); Tatsumi, Takuji, Sakai, Osaka (JP)
(74) Representative: Grosse, Wolfgang

(57) **Abstract**

A bicycle crank axle bearing assembly (41) includes a pair of first and second axle support members (60, 61), a pair of first and second bearings (63, 64) and a lock nut. The first and second axle support members (60, 61) include first and second mounting sections with first and second male screw parts (60c, 61c) that are configured and arranged to be non-rotatably coupled to a hanger part (29) of a bicycle frame (11), and first and second bearing retaining sections (60a, 61 a) in which the first and second bearings (63, 64) are retained to rotatably support a crank axle (54). The lock nut is disposed at least one of the first and second male screw parts (60c, 61 c) of the first and second axle support members (60, 61) to retain an axial position of the at least one of the first and second support members with respect to the hanger part (29).

## Description

### CROSS-REFERENCE TO RELATED APPLICATIONS

This application claims priority to Japanese Patent Application No. 2004-343935. The entire disclosure of Japanese Patent Application No. 2004-343935 is hereby incorporated herein by reference.

### BACKGROUND OF THE INVENTION

### Field of the Invention

This invention generally relates to a bicycle crank axle bearing assembly. More specifically, the present invention relates to a bicycle crank axle bearing assembly that has a crank axle is mounted on a hanger portion of a bicycle frame having a pair of first and second female screw parts on both end portions of the hanger portion, while a pair of cranks are coupled to the crank axle.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle crank axle bearing assembly.

Japanese Laid-Open Patent Publication No. 2004-249770 discloses a conventional crank axle bearing assembly called a bottom bracket that is mounted on a hanger part of a bicycle. The conventional crank axle assembly is equipped with first and second axle support members that have first and second bearing retaining sections, respectively. The first and second axle support members are screwed in to both end portions of the hanger part separately. The conventional crank axle assembly further includes first and second bearings that are stored on the first and second axle support members. The crank axle is rotatably supported on both of the first and second bearings, and right and left cranks are non-rotatably mounted on the both axial end portions of the crank axle.

In such conventional crank axle bearing assembly, the right gear crank is caulked together on the right axial end portion of the crank axle. The inner rings of the first and second bearings are pressed by inner edge parts of the right and left cranks and disposed so that the right and left cranks can exert pressure to the inner rings of the first and second bearings. The left crank is non-rotatably mounted on the crank axle by a serration that is formed on a circumference surface at the left axial end portion of the crank axle. Moreover, the left crank is fastened to the crank axle by a fastening bolt that is screwed on the left edge inner circumference surface of the crank axle. When the left crank is fastened to the crank axle by the fastening bolt, the right and left cranks press the inner rings of the first and second bearings inwardly in the axial direction by placing the right and left cranks in contact with the outside surfaces of the inner rings of the first and second bearings in the axial direction. Misalignment and/or jounce in the axial direction can be reduced by adjusting a bearing play or play by modifying the pressure. In addition, a slit is formed along the radial direction on a crank axle mounting part of the left crank. After fastening the left crank by the fastening bolt, the left crank can be further tightened securely on the crank axle by narrowing the width of the slit by using two mounting bolts.

In the conventional bicycle crank axle bearing assembly as explained above, by pressing the inner rings of the first and second bearings by using the fastening bolt that secures the left crank, the bearing play is adjusted through the left crank by fastening the left crank to the crank axle. Then, the left crank is further secured onto the crank axle by narrowing the width of the slit of the left crank by the mounting bolts.

However, in the conventional bicycle crank axle bearing assembly, once the right and left cranks are in place, it is necessary to loosen the mounting bolts and then turning the fastening bolt to readjust the bearing play after fastening the left crank to the crank axle. Thus, in the conventional bicycle crank axle bearing assembly, it is onerous to readjust the bearing play after fixing the left crank,.

In view of the above, it will be apparent to those skilled in the art from this disclosure that there exists a need for an improved bicycle crank axle bearing assembly. This invention addresses this need in the art as well as other needs, which will become apparent to those skilled in the art from this disclosure.

### SUMMARY OF THE INVENTION

One object of the present invention is to provide a bicycle crank axle bearing assembly that enable easy adjustment to the bearing play in the bicycle crank axle bearing assembly with axle support members screwed onto a hanger part of a bicycle frame.

A bicycle crank axle bearing assembly of the present invention is adapted to rotatably couple a crank axle with a pair of first and second crank arms to a hanger part of a bicycle frame. The bicycle crank axle bearing assembly basically comprises a pair of first and second axle support members, first and second bearings and at least one lock nut. The first axle support member is configured and arranged to be coupled to a first axial end portion of the crank axle, and has a first male screw part formed on an outer circumferential surface and a first bearing retaining part formed on an inner circumferential surface. The first male screw part is configured and arranged to engage with a first female screw part formed on a first axial end of the hanger part. The second axle support member is configured and arranged to be coupled to a second axial end portion of the crank axle, and has a second male screw part formed on an outer circumferential surface and a second bearing retaining part formed on an inner circumferential surface. The second male screw part is configured and arranged to engage with a second female screw part formed on a second axial end of the hanger part. The first and second bearings are retained in the first and second bearing retaining parts of the first and second axle support members, respectively, so that axial inward movements of the first and second bearings are restricted by the first and second axle support members, respectively, and axial outward movements of the first and second bearings are restricted by one of the crank axle and the first and second crank arms. The least one lock nut is coupled to at least one of the first and second male screw parts of the first and second axle support members.

The bicycle crank axle bearing assembly is configured to mount the first and second axle support members onto the hanger part by screwing the first and second male screw parts of the first and second axle support members on first and second female screw parts formed on the hanger part. When the first and second axle support members are mounted on the hanger part, the lock nut is preliminarily mounted on at least one of the first and second male screw parts. When the crank axle is mounted, and the right and left crank arms are mounted on both axial ends of the crank axle, the axial outward movements of the bearings are restricted by one of the crank axle and the pair of crank arms, and the axial inward movements are restricted by the axle support members. By rotating the one of the first and second axle support member on the side where the lock nut is mounted in the loosening direction, in this state, the bearing mounted on the one of the first and second axle support members places pressure axially outwardly toward the crank axle, and the bearing play can be adjusted. After completing the adjustment of the bearing play, the axial position of the one of the first and second axle support members is retained by the lock nut to prevent misalignment in the axial direction. Since the axial position of the one of the first and second support members with respect to the hanger part can be retained in any position by setting the lock nut, the adjustment of the bearing play can be performed by the axle support member. The adjustment of the bearing play by the crank arm is no longer necessary, and the adjustment of the bearing play can be performed easily.

In the bicycle crank axle bearing assembly in accordance with another aspect of the present invention, the first and second bearing retaining parts of the first and second axle support members are disposed radially inwardly with respect to the first and second male screw parts of the first and second axle support members, respectively. Therefore, since the first and second bearing retaining parts and the first and second male screw parts are disposed so at least part of these parts overlap when view in a radial direction of the crank axle, downsizing and weight-saving of the crank bearings can be facilitated.

In the bicycle crank axle bearing assembly in accordance with another aspect of the present invention, the first and second bearing retaining parts of the first and second axle support members are disposed axially outwardly with respect to the first and second male screw parts of the first and second axle support members, respectively. In this case, since the bearings are disposed on the outside the male screw part in the axial direction, the distance between the first and second bearings becomes longer, the distances between the first and second crank arms and the first and second bearings, respectively, are shortened, and the rigidity of the crank axle can be improved.

In the bicycle crank axle bearing assembly in accordance with another aspect of the present invention, each of the first and second bearings is arranged as a roller bearing having an outer ring, an inner ring and a plurality of roller members disposed between the outer ring and the inner ring. Moreover, the first and second bearings are configured and arranged such that the axial outward movements of the inner rings of the first and second bearings are restricted by the crank axle, and the first and second axle support members restrict the axial inward movements of the outer rings of the first and second bearings, respectively. In this case, since the axial outward movements of the inner rings are restricted by the crank axle, and the axial inner movements of the outer rings are restricted by the axle support members, the crank axle can be mounted after mounting the axle support members on the hanger part by disposing the restricted parts not to be projected from the outer circumference surface.

In the bicycle crank axle bearing assembly in accordance with another aspect of the present invention, each of the first and second bearings is arranged as a roller bearing having an outer ring, an inner ring and a plurality of roller members disposed between the outer ring and the inner ring. Moreover, the first and second bearings are configured and arranged such that the axial outward movements of the inner rings of the first and second bearings are restricted by the first and second crank arms, respectively, and the first and second axle support members restrict the axial inward movements of the outer rings of the first and second bearings, respectively. In this case, since the axial outward movements of the inner rings can be restricted by one of the crank arms, the restriction of the inner rings by the crank axle is not necessary, and the crank axle can be mounted after mounting the axle support members on the hanger part.

In the bicycle crank axle bearing assembly in accordance with another aspect of the present invention, the first and second bearing retaining parts of the first and second axle support members have a larger diameter than the first and second male screw parts of the first and second axle support members, respectively. In this case, since the bearings are disposed on the outside the hanger part in the axial direction, the distance between the bearings becomes longer, the outside diameter of the crank axle can be enlarged, and the rigidity of the crank axle can be improved.

In the bicycle crank axle bearing assembly in accordance with another aspect of the present invention, the first crank arm is integrally coupled to the first axial end portion of the crank axle, and the lock nut is mounted on the second male screw part of the second axle support member. In this case, since the lock nut is placed on the second crank arm side instead of the first crank arm side where comparatively large parts such as sprockets are placed, the lock nut or the axle support member is easily turned. For this reason, the adjustment of the bearing play becomes even easier.

In the bicycle crank axle bearing assembly in accordance with another aspect of the present invention, a connecting member is further provided that concentrically extends between the first and second axle support members to guide the crank axle passing therethrough. In this case, by linking two axle support members, the crank axle is guided from one axle support member to the other axle support member by the connecting member. For this reason, the mounting of the crank axle becomes easier.

Accordingly to the present invention, since the axial position of the axle support member with respect to the hanger part can be fixed in any position by using the lock nut, the adjustment of the bearing play can be performed by the axle support member. For this reason, it is no longer necessary to adjust the bearing play by a crank arm, and the bearing play can be easily adjusted.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is an overall right side elevational view of a bicycle with a bicycle crank axle bearing assembly in accordance with a first embodiment of the present invention;
Figure 2 is a transverse cross sectional view of the crank axle bearing assembly in accordance with the first embodiment of the present invention;
Figure 3 is an enlarged cross sectional view of a left side portion of the crank axle bearing assembly in accordance with the first embodiment of the present invention;
Figure 4 is an enlarged partial cross sectional view of a crank axle mounting part of a left crank with a state in which a fastening bolt is removed in accordance with the first embodiment of the present invention;
Figure 5 is an elevational view of a lock nut of the crank axle bearing assembly in accordance with the first embodiment of the present invention;
Figure 6 is a transverse cross sectional view of a crank axle bearing assembly in accordance with a second embodiment of the present invention; and
Figure 7 is a transverse cross sectional view of a crank axle bearing assembly in accordance with a third embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

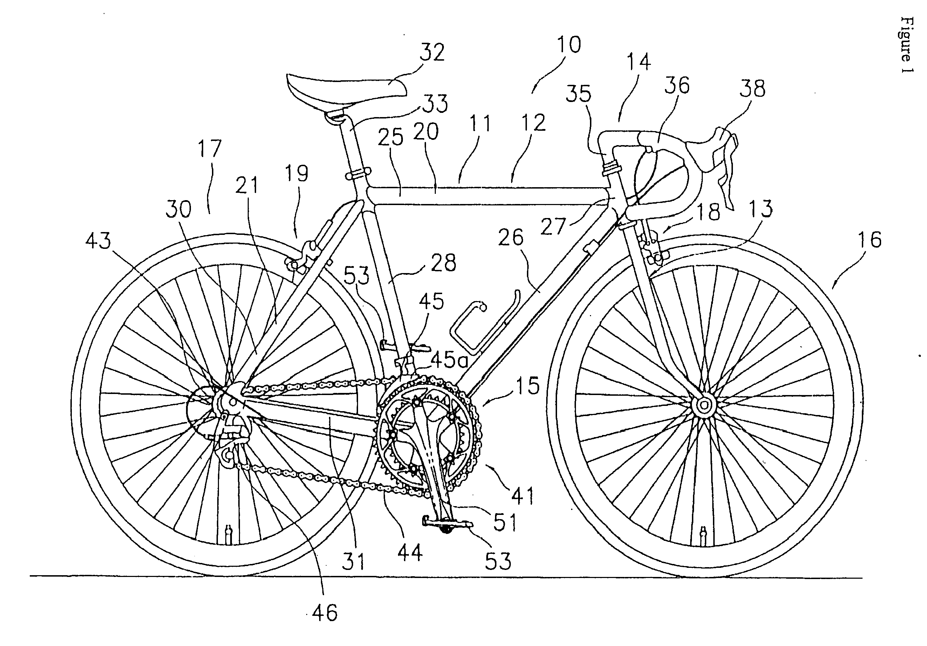

Referring initially to Figure 1, a bicycle 10 is illustrated that is equipped a front derailleur 45 in accordance with a first embodiment of the present invention. In this example, the bicycle 10 is a road bike that has a diamond-shaped frame 11. The frame 11 serves as the framework of the bicycle body. The frame 11 has a frame body 12 with a front fork 13 pivotally supported on a front part of the frame body 12 such that the front fork 13 can rotate freely about an axis that is tilted slightly from vertical. The lower or bottom part of the front fork 13 is divided into two prongs. The bicycle 10 is also provided with a drop-type handlebar unit 14 connected to the front fork 13, a drive unit 15 provided on a lower part of the frame body 12. The drive unit 15 is configured to convert pedaling force into driving force. A front wheel 16 is supported in a freely rotatable manner on the bottom end of the front fork 13, while a rear wheel 17 is supported in a freely rotatable manner on a rear part of the frame body 12. The bicycle 10 is also provided with a pair (front and rear) of brake devices 18 and 19.

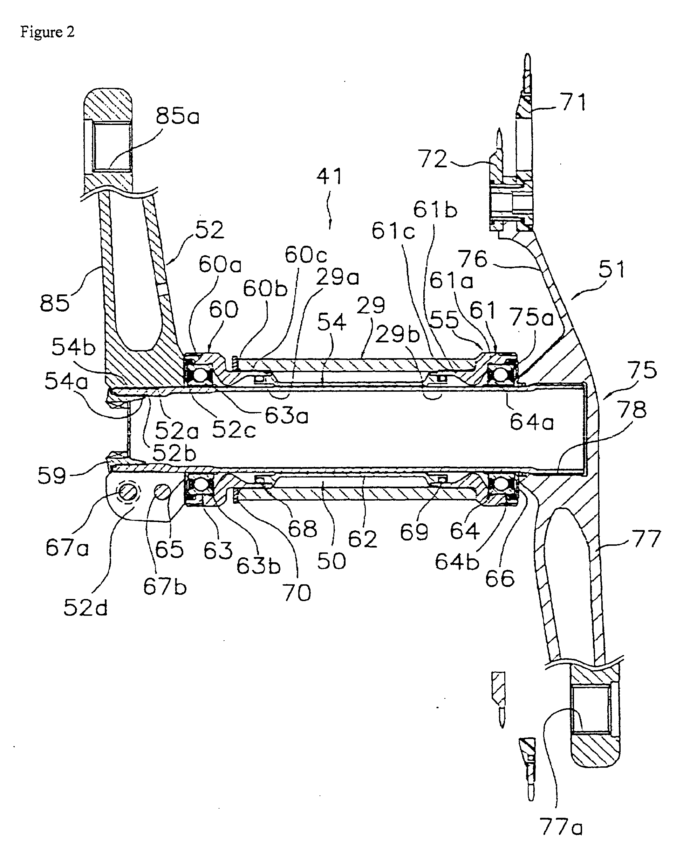

As seen in Figure 1, the frame body 12 has a triangularly shaped front triangle 20 and a triangularly shaped rear triangle 21 that is arranged rearward of the front triangle 20. The front triangle 20 is formed by a top tube 25, a down tube 26, a head tube 27, and a seat tube 28. The top tube 25 is arranged generally horizontally, while the down tube 26 is arranged below the top tube 25 such that it slants obliquely upward toward the front. The head tube 27 joins the front ends of the top tube 25 and the down tube 26 together. The seat tube 28 extends diagonally upward and joins the rear ends of the top tube 25 and the down tube 26 together. A seat post 33 has a saddle 32 fastened thereto. The seat post 33 is secured in the seat tube 28 such that its position can be vertically adjusted up and down. A cylindrical or tubular hanger part 29 (shown in Figure 2) is formed at a connection portion where the seat tube 28 and the down tube 26 are joined together. The rear triangle 21 is formed by the seat tube 28, a pair of seat stays 30 and a pair of chain stays 31. The seat stays 30 are joined at their front ends to the seat tube 28 and extend diagonally downward as two separate prongs. The chain stays 31 also extend rearward as two separate prongs, but from the bottom end of the seat tube 28. The chain stays 31 are joined at their rear ends to the seat stays 30.

The handlebar unit 14 includes a handlebar stem 35 and a handlebar 36. The handlebar stem 35 of the handlebar unit 14 is fastened to the upper part of the front fork 13 in such a manner that it can be vertically moved up and down. The handlebar 36 is fixed at a horizontally extending center portion on a top edge of the handle stem 35 with both free ends having curved portions extending from the center portion. A brake lever 38 provided with a gear shifting capability is mounted on both ends of the handlebar 36.

The drive unit 15 basically includes a front crankset 41, a rear gear cassette unit 43, a chain 44, a front derailleur 45, and a rear derailleur 46. The front crankset 41 is provided on the bottom bracket of the bicycle 10. The rear gear cassette unit 43 is mounted in a non-rotatable manner to the free hub of the rear wheel 17. The chain 44 is arranged on the front crankset 41 and the rear gear cassette unit 43 so as to span therebetween. The front derailleur 45 and the rear derailleur 46 function as gear changing devices. The front derailleur 45 has a chain guide 45a where the chain 44 is inserted.

The drive unit 15 basically includes a front crankset 41, a rear gear cassette unit 43, a chain 44, a front derailleur 45, and a rear derailleur 46. The front crankset 41 is provided on the hanger part 29 of the bicycle 10. The rear gear cassette unit 43 is mounted in a non-rotatable manner to the free hub of the rear wheel 17. The chain 44 is arranged on the front crankset 41 and the rear gear cassette unit 43 so as to span therebetween. The front derailleur 45 and the rear derailleur 46 function as gear changing devices. The front derailleur 45 has a chain guide 45a where the chain 44 is inserted.

As shown in Figures 1 and 2, the front crankset 41 basically includes a crank axle assembly 50, a right crank arm 51, a left crank arm 52, and a pair of pedals 53 (Figure 1). The crank axle assembly 50 preferably has a crank axle 54 rotatably supported on the hanger part 29 of the frame 11 by a bottom bracket 55 (e.g., a crank axle bearing assembly of this invention) that is fixedly mounted on the hanger part 29. The right crank arm 51 is preferably fixedly coupled to the right end of the crank axle 54 by an appropriate fixing method such as caulking, bonding or welding so that the right crank arm 51 is integrally coupled to the crank axle 54. The left crank arm 52 is removably fastened to the left end of the crank axle 54. The pedals 53 are mounted to the tip or free ends of the right and left crank arms 51 and 52.

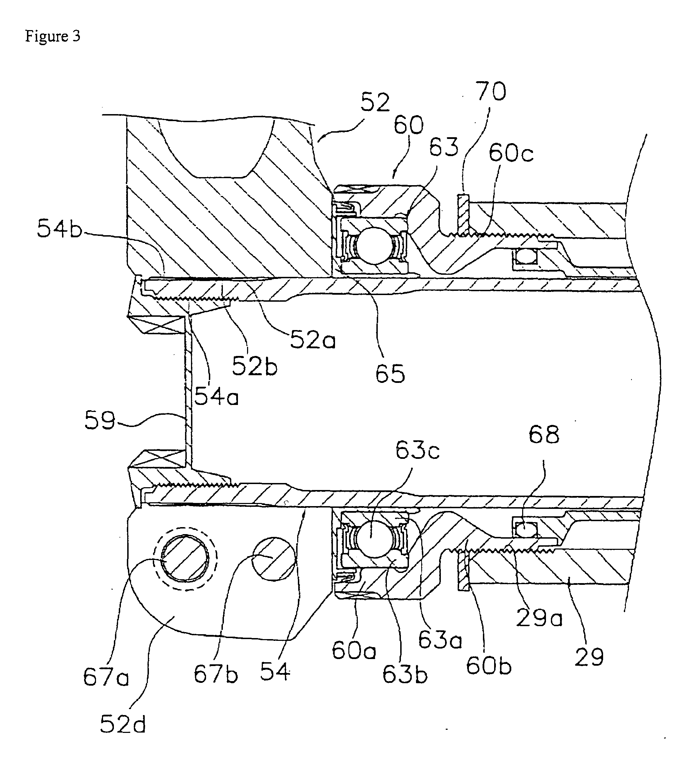

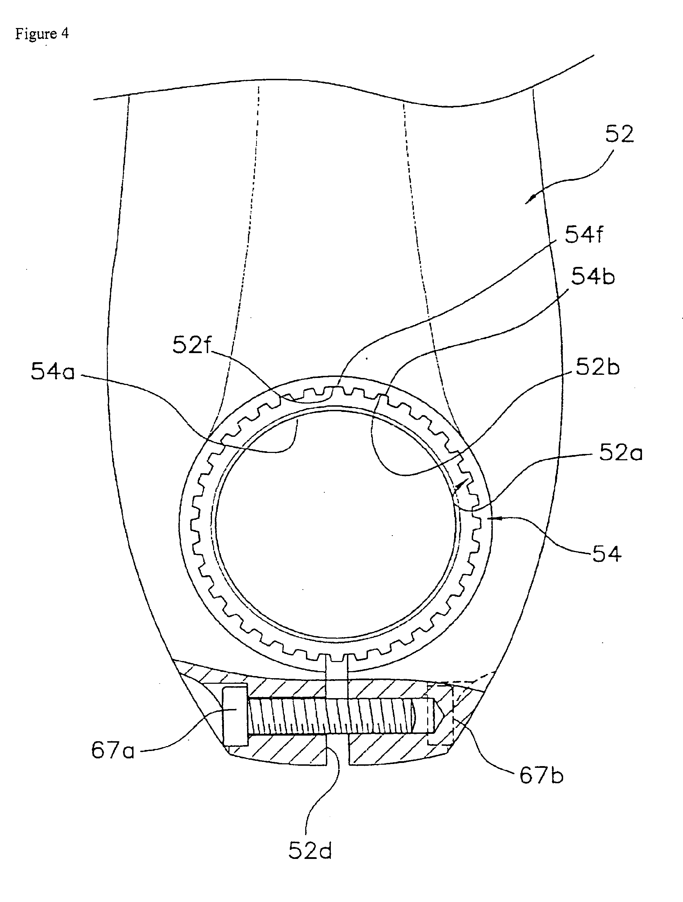

The crank axle 54 is preferably an alloy hollow pipe-shaped member that is highly rigid such as chrome molybdenum steel. As shown in Figures 3 and 4, the left end portion of the crank axle 54 includes a female (internal threads) screw part 54a and a plurality of external serrations 54b. The female (internal threads) screw part 54a is disposed on an inner circumferential surface of the left end portion of the crank axle 54 so that a fastening bolt 59 is screwed into the female screw part 54a to fasten the left crank arm 52. The serrations 54b is provided on the outer circumferential surface of the left end portion of the crank axle 54 to non-rotatably link the left crank arm 52 thereon.

The bottom bracket 55 includes a pair (left and right) of bearing housings (e.g., the first and second axle support members) 60 and 61, a tube-shaped connecting member 62, a pair (left and right) of bearings 63 and 64, a pair (left and right) of cover members 65 and 66 and a lock nut 70. The bearing housings 60 and 61 are screwed in from both ends of the hanger part 29. The tube-shaped connecting member 62 concentrically links the left and right bearing housings 60 and 61. The left and right bearings 63 and 64 are mounted on the left and right bearing housings 60 and 61. The left and right cover members 65 and 66 are mounted between the crank axle 54 and inner rings of left and right bearings 63 and 64. In this embodiment, the left bearing 64 constitutes a first bearing and the right bearing 63 constitutes a second bearing. The lock nut 70 is screwed in the left bearing housing 60.

The left and right bearing housings 60 and 61 are shoulder tube-shaped members that include a pair (left and right) of bearing retaining sections or parts 60a and 61 a, respectively, and a pair (left and right) of mounting sections or parts 60b and 61b, respectively. The bearings 63 and 64 are retained and stored separately in the bearing retaining sections 60a and 61a. The left and right mounting sections 60b and 61b are placed in alignment with the bearing retaining sections 60a and 61 a, respectively, and non-rotatably mounted on the axial end portions of the hanger part 29. The bearing retaining sections 60a and 61a are disposed axially outwardly with respect to the mounting sections 60b and 61b and have a larger maximum diameter than the mounting sections 60b and 61 b as seen in Figure 2. The hanger part 29 includes the female screw parts 29a and 29b on the inner circumference on its both right and left edges, and the mounting sections 60b and 61b include male screw parts 60c and 61 c that are placed axially inwardly with respect to the bearing retaining sections 60a and 61 a so that the male screw parts 60c and 61 c of the mounting sections 60b and 6 1 b are screwed with the female screw parts 29a and 29b, respectively. In order to prevent the screws from becoming loose by rotation of the cranks, the left female screw part 29a is preferably right-hand screw threads, and the right female screw part 29b is preferably left-hand screw threads. Therefore, the male screw part 60c that screws into the left female screw part 29a is preferably right-hand screw threads, and the male screw part 61c is preferably left-hand screw threads.

The connecting part 62 is a tubular member that has an inside diameter that the crank axle 54 can penetrate therethrough. The connecting part 62 is coupled to inner edges of the mounting sections 60b and 61b of the left and right bearing housings 60 and 61 at axial ends thereof. Two O rings 68 and 69 are preferably mounted on connecting parts of the connecting member 62 and the bearing housings 60 and 61, respectively as seen in Figure 2.

The bearings 63 and 64 are preferably ball bearings or roller bearings that include inner rings 63a and 64a and outer rings 63b and 64b with a plurality of ball bearing disposed therebetween. The bearings 63 and 64 are disposed so that movements of the inner rings 63a and 64a toward outside in the axial direction (the bearing 63 is on the left in Figure 2, and the bearing 64 is on the right in Figure 2) is restricted by the left and right crank arms 52 and 51 via the cover members 66 and 65 respectively, and movements of the outer rings 63b and 64b toward the inside in the axial direction (the bearing 63 is on the left in Figure 2, and the bearing 64 is on the right in Figure 2) is restricted by the bearing housings 60 and 61, respectively. The bearings 63 and 64 are preferably sealed bearings where seals are mounted between the inner rings 63a and 64a and the outer rings 63b and 64b, respectively, and grease is inserted in the bearings 63 and 64 in advance. Therefore, maintenance of the bearings 63 and 64 for lubrication can be omitted. Accordingly, with the arrangement of the crank axle assembly 50 as described above, the axis diameter of the crank axle 54 can be lengthened by placing the bearings 63 and 64 on the outside of the hanger part 29 in the axial direction. Therefore, the weight of the crank axle assembly 50 can be reduced by making the crank axle 54 hollow while the strength and rigidity of the crank axle 54 can be maintained at a high level.

The cover members 65 and 66 are, for example, hard resin members that cover the circumference surfaces on the bearing housings 60 and 61. The cover members 65 and 66 are disposed so that the cover members 65 and 66 are sandwiched by the left and right cranks 52 and 51 and the inner rings 63a and 64a of the bearings 63 and 64, respectively.

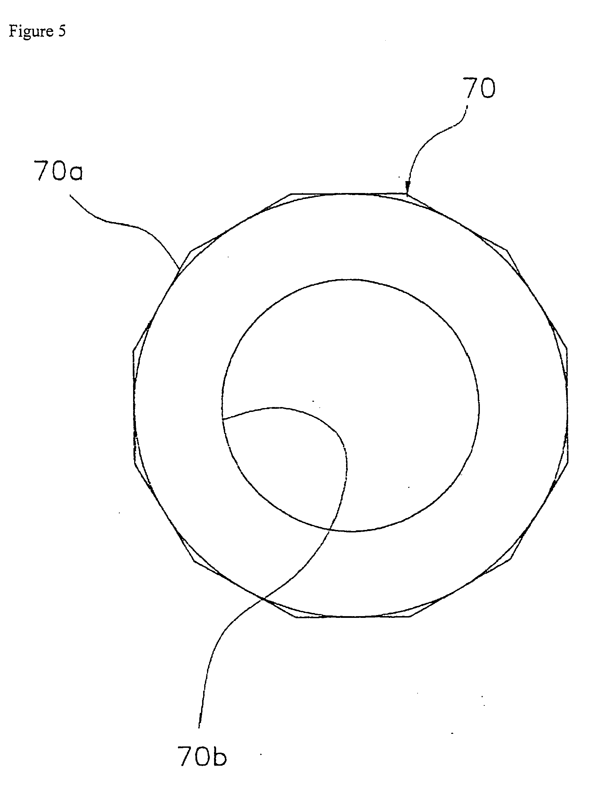

The lock nut 70 is preferably a flat regular-dodecagon-shaped nut as shown in Figure 5. More specifically, as seen in Figure 5, the lock nut 70 includes a dodecagon tool engagement part 70a where a tool is engaged and a female screw part 70b that is configured and arranged to be screwed on the male screw part 60c of the bearing housing 60. The lock nut 70 is designed to retain the bearing housing 60 by the double nut action using the female screw 29a of the hanger part 29 and enable to fix the bearing housing 60 at any position with respect to the hanger part 29 in the axial direction. The bearing play can be adjusted with the bearing housing 60 by mounting the lock nut 70.

As seen in Figure 2, the right crank arm 51 is a gear crank that has a pair of chain rings or sprockets 71 and 72 mounted thereon in a removable manner. The right crank arm 51 includes a crank connecting part 75, a plurality of arm parts 76, and a right crank arm part 77. The crank connecting part 75 has a mounting recessed part 78 that is formed with a tube-shaped space and non-rotatably mounted on the right edge of the crank axle 54. The arm parts 76 (five arm parts 76 are provided in this embodiment) can mount the sprockets 71 and 72 on their free ends and radially extend from the crank connecting part 75. The right crank arm part 77 is fixedly coupled on the right edge of the crank axle 54 and a pedal mounting hole 77a is formed on its free end. An inner edge surface 75a in the axial direction of the connecting part 75 of the right crank arm 51 is disposed to press the inner ring 64a of the bearing 64 via the cover member 66.

The left crank arm 52, as shown in Figures 2-4, includes a hollow left crank arm part 85 with a pedal mounting hole 85a on its free end where the pedal 53 is screwed on. The left crank arm 52 includes a connecting hole 52a that is non-rotatably connected on the crank axle 54 in the center portion. In particular, the connecting hole 52 has a plurality of serrations 52b so that the left crank arm 52 is non-rotatably coupled to the crank axle 54 at a certain rotational phase by with between the serrations 54b formed on the crank axle 54. The inner ring 63a of the bearing 63 is pressed on the inner edge surface 52c in the axial direction of the left crank arm 52 via the cover member 65 and the fixed member 56. The left crank arm 52 is fixedly coupled to the crank axle 54 by the fastening bolt 59 that is screwed on the female screw part 54a of the crank axle 54. The crank axle assembly 50 is configured and arranged such that the bearings 63 and 64 are pressed with the left and right cranks 52 and 51 by screwing the fastening bolt 59. Accordingly, the bearing play of the bearings 63 and 64 can be adjusted. The slit 52d is formed on the connecting hole 52a of the left crank arm 52 that is mounted on the crank axle 54. The left crank arm 52 is strongly fixed on the crank axle 54 by tightening up two mounting bolts 67a and 67b that are located on the bottom of the crank axle 54 as seen in Figure 2. Thus, the slit width of the slit 52d is narrowed by tightening the mounting bolts 67a and 67b that extend across the slit 52d to strongly fix the left crank arm 52 on the crank axle 54. These two mounting bolts 67a and 67b are, for example, hexagon socket head bolts, and their heads are preferably inserted from different directions.

When the crank axle assembly 50 of the present invention as described above is mounted on the hanger part 29, first, the bearings 63 and 64 and the cover members 65 and 66 are mounted on the left and right bearing housings 60 and 61. In addition, the connecting member 62 is mounted on one of the bearing housings 60 and 61. Also, the lock nut 70 is mounted on the male screw part 60c of the bearing housing 60.

In this state, the bearing housings 60 and 61 are screwed to the female screw parts 29a and 29b of the hanger part 29, respectively, with torque of a certain range. In particular, at this time, the bearing housing 61 is screwed all the way with a certain range of torque so that the bearing retaining section 61 a is abut against an axial end surface of the hanger part 29. The bearing housing 60 is then screwed all the way with a certain range of torque on the hanger part 29 while the lock nut 70 is disposed between an axial end of the hanger part 29 and the bearing retaining section 60a. Then, the lock nut 70 is turned so that the lock nut 70 abuts against the hanger part 29 to non-rotatably retain the axial position of the bearing housing 60 with respect to the hanger part 29. Accordingly, the left bearing housing 60 is retained and the axial position thereof with respect to the hanger part 29 is fixed because the connection between the bearing housing 60 and the hanger part 29 becomes hard to loosen by the lock nut 70.

Next, the gear crank arm 51 to which the crank axle 54 is fixedly coupled is inserted from the side of the bearing housing 61. The left crank arm 52 is mounted on an end of the crank axle 54 that projects axially outwardly from the left bearing housing 60. The left crank arm 52 is mounted with a rotational phase orientation that is offset by 180 degrees from the right crank arm 51. A recess and protrusion parts 52f and 54f that are longer in the circumferential direction than other serrations is formed on the serrations 52b and 54b to place the right crank 51 and the left crank 52 with a rotational phase of 180 degrees apart as seen in Figure 4. Therefore, both of the cranks 52 and 51 are placed with rotational phase of 180 degrees apart by locking the recess and protrusion parts 52f and 54f.

Then, the fastening bolt 59 is screwed to the female screw part 54a of the crank axle 54, and the left crank 52 is fixed onto the crank axle 54. The crank axle 54 moves toward left in Figure 2 by tightening up the fastening bolt 59, and the inner edge surfaces 75a and 52c of the right and left cranks 51 and 52 place inward pressure on the inner rings 63a and 64a of the bearings 63 and 64 through the cover members 65 and 66. An adjustment to reduce misalignment between right and left of the crank axle 54 is performed by mounting the left crank 52 and adjusting the amount of pressure. When the adjustment of the bearing play is completed, the mounting bolts 67a and 67b of the left crank 52 are tightened up, and the left crank arm 52 is securely fixed onto the crank axle 54.

The initial adjustment of the bearing play is completed in this state. However, when the bicycle is driven over time, the adjustment of the bearing play is gradually ruined and misalignment or jounce in the axial direction will occur, which requires a readjustment of the bearing play. In such case, the lock nut 70 is first loosened. Thus, the locking of the bearing housing 60 is released and the bearing housing 60 can be turned in the loosening direction. When the bearing housing 60 is turned in the loosening direction, the left bearing housing 60 places outward pressure on the outer ring 63b of the bearing 63 in the axial direction (the left side in Figure 3). Accordingly, misalignment or jounce of the bearings 63 and 64 are reduced, and the readjustment of the bearing play can be performed. When a state is attained with no misalignment and smooth turns are achieved, the lock nut 70 is tightened toward the axial end surface of the hanger part 29. Consequently, the bearing housing 60 is retained, and the bearing housing 60 is placed in an appropriate axial position with the bearing play is adjusted.

Accordingly, with the first embodiment of the present invention, since the axial position of the bearing housing 60 with respect to the hanger part 29 is selectively fixed in any position by mounting the lock nut 70, the bearing play can be adjusted by using the bearing housing 60. Therefore, the adjustment of the bearings 63 and 64 by the crank arms 51 and 52 is no longer necessary, and the adjustment of the bearings 63 and 64 can be performed easily.

### SECOND EMBODIMENT

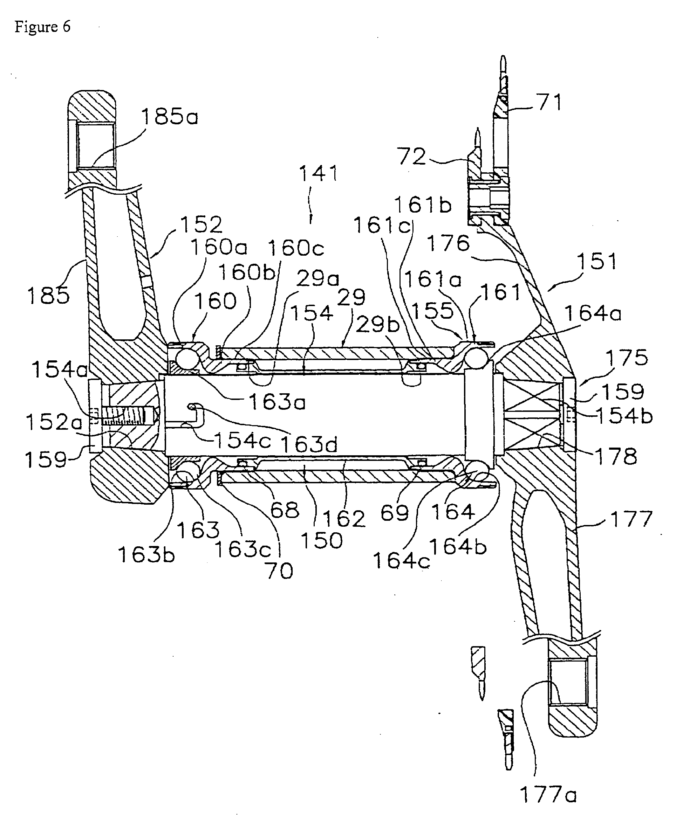

Referring now to Figure 6, a bicycle crank axle bearing assembly in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

The bicycle crank axle bearing assembly in accordance with the second embodiment is basically identical to the bicycle crank axle bearing assembly of the first embodiment except the arrangements of a crank axle 154 and a pair of bearings 163 and 164 are slightly different. More specifically, in the first embodiment, the axial outward movement of the inner rings 63a and 64a of the bearings 63 and 64 is restricted by the left and right cranks 52 and 51 as explained above. On the other hand, in the second embodiment, as shown in Figure 6, the axial outward movement of inner rings 163a and 164a of the bearings 163 and 164 is restricted by the crank axle 154.

In Figure 6, the second embodiment differs from the first embodiment only in the configuration of a front crankset 141 of the drive member. Therefore, descriptions of parts other than the front crankset 141 are omitted. The front crankset 141 basically includes a crank axle assembly 150, a right crank arm 151, a left crank arm 152, and a pair of pedals 53 (Figure 1). The right and left crank arms 151 and 152 are removably fastened to the right and left ends of the crank axle 154 with the pedals 53 mounted to the tip or free ends of the right and left crank arms 151 and 152. The crank axle assembly 150 preferably has the crank axle 154 rotatably supported on the hanger part 29 of the frame 11 by a bottom bracket 155 (e.g., a crank axle bearing assembly) that is fixedly mounted on the hanger part 29.

The crank axle 154 is a solid or hollow axle member preferably made of an aluminum base alloy or the like. On both axial ends of the crank axle 154, female screw parts (only the female screw part 154a on the left side is shown in Figure 6) are formed so that a pair of fastening bolts 159 are screwed in the female screw parts to non-rotatably fix the left and right crank arms 152 and 151 on the crank axle 154. In addition, a pair of rotation locking part (only the rotation locking part 154b on the right side is shown in Figure 6) are provided on outer circumferential surfaces of axial ends of the crank axle 54. Each of the rotation locking parts has four tapering flat surfaces for non-rotatably for non-rotatably mounting the crank arms 151 and 152 on the crank axle 154.

The bottom bracket 155 has a pair of left and right bearing housing 160 and 161 (e.g., the first and second axle support members) that are screwed onto both axial ends of the hanger part 29, a tubular connecting member 162 that concentrically links the left and right bearing housings 160 and 161, a pair of left and right bearings 163 and 164 that are retained in the left and right bearing housings 160 and 161, and a lock nut 70 that is screwed on the left bearing housing 160 as seen in Figure 6.

The left and right bearing housings 160 and 161 are shoulder tube-shaped members with a pair (left and right) of bearing retaining sections 160a and 161 a, and a pair (left and right) of mounting sections 160b and 161b. The bearing retaining sections 160a and 161 a include curved ball receiving or pocket surfaces at axially inward positions that constitute left and right outer rings 163b and 164b of the bearings 163 and 164. The mounting sections 160b and 161b are disposed in alignment with the bearing retaining sections 160a and 161 a, respectively, in the axial direction and non-rotatably mounted on the left and right axial ends of the hanger part 29. The bearing retaining sections 160a and 161a are disposed on the axially outwardly with respect to the bearing retaining sections 160a and 161 a, respectively, and have larger diameter than the mounting sections 160b and 161b.

The hanger part 29 includes the female screw parts 29a and 29b on the inner circumference surfaces of both right and left axial ends thereof and the mounting sections 160b and 161b include male screw parts 160c and 161c, respectively, that are screwed in the female screw parts 29a and 29b. Usually, in order to prevent loosening due to rotations of the crank arms 151 and 152, the left female screw part 29a is preferably a right-had screw threads, and the right female screw part is preferably a left-hand screw threads. Therefore, the male screw parts 160c and 161c are preferably a right-hand screw threads and a left-hand screw threads, respectively.

The connecting member 162 is basically identical to the connecting member 62 of the first embodiment explained above, and the description is omitted. In addition, as in the first embodiment, the connecting member 162 may be omitted.

The bearings 163 and 164 are roller bearings, such as a ball bearings, including a pair of inner rings 163a and 164a, the outer rings 163b and 164b integrally formed with the bearing housings 160 and 161, and a plurality of roller members 163c and 164c such as spheres, that are disposed between the inner rings 163a and 164a and the outer rings 163b and 164b. The inner ring 163a of the left bearing 163 is mounted in freely attachable and removable manner such that an axial outward movement of the inner ring 163a is restricted by the crank axle 154. Specifically, a pair of locking grooves 154c (only one locking groove 154c is shown in Figure 6) having a shape of number 7 are formed on an outer surface of a left side end portion of the crank axle 154 at opposite positions with respect to an axial center line of the crank axle 154. A pair of locking protrusions 163d (only one locking protrusion 163d is shown in Figure 6) are formed on an inner circumference surface of the inner ring 163a so that the locking protrusions 163d engage with the locking grooves 154c of the crank axle 154. The inner ring 163a is first mounted from the left axial end of the crank axle 154 while the locking protrusions 163d are engaged with the locking grooves 154c. Then, the inner ring 163 is moved toward right in the axial direction, and then the inner ring is moved toward left after slightly turned. Accordingly, the inner ring 163a is mounted on the crank axle 154 while the axial movement of the inner ring 163a toward the left (axial outward movement) is restricted. In addition, the inner ring 164a of the right bearing 164 is fixed together with the crank axle 154 or on the crank axle 154 by an appropriate fixing method such as applying pressure, fitting, bonding or welding. Alternatively, the axial outward movement (toward right in Figure 6) of the inner ring 164a may be restricted by providing a larger diameter abutment part on the right side of the inner ring mounting part of the crank axle 154 and mounting the ring-shaped inner ring 164a from the left side of the crank axle 154.

In addition, the outer rings 163b and 164b are, as described above, configured on the inner circumference surface of the bearing retaining sections 160a and 161 a, respectively, by the pocket surfaces. Thus, the bearings 163 and 164 are arranged so that the axial outward movements of the inner rings 163a and 164a (the bearing 163 is on the left in Figure 6, and the bearing 164 is on the right in Figure 6) are restricted by the crank axle 154, and the axial inward movement of the outer rings 163b and 164b (the bearing 163 is on the right in Figure 6, and the bearing 164 is on the left in Figure 6) are restricted by the bearing housings 160 and 161, respectively. Accordingly, the diameter of the crank axle 154 can be enlarged by placing the bearings 163 and 164 on the outside of the hanger part 29 in the axial direction. Therefore, even if weight-saving is facilitated by using an aluminum base alloy for the crank axle 154, the strength and the rigidity of the crank axle 54 can be maintained at a high level.

The detailed description of the lock nut 70 is omitted because the lock nut 70 is identical to the one shown in Figure 5. As explained above, the lock nut 70 includes the tool engagement part 70a to enable a tool to be engaged and the female screw part 70b. The female screw part 70b is screwed onto the male screw part 160b formed on the bearing housing 160. Thus, the lock nut 70 retains the left bearing housing 160 with the female screw part 29a of the hanger part 29 by a double-nut action so that the axial position of the bearing housing 160 with respect to the hanger part 29 is fixed at any position. Thus, in the second embodiment too, the adjustment of the bearing play can be performed with the bearing housing 160 by mounting the lock nut 70.

The right crank 151 includes a crank connecting part 175, a connecting hole 178, a plurality (e.g. five) of arm parts 176, and a right crank arm portion 177. The crank connecting part 175 with a round-shaped space has a rectangular tapered-shaped connecting hole 178 non-rotatably coupled to the right axial end of the crank axle 154 in a freely attachable and removable manner. The arm parts 176 have two small and large sprockets 71 and 72 extending radially from the crank connecting part 175 that can be mounted on free ends of the arm parts 176. The right crank arm portion 177 is fixed on the right edge of the crank axle 154 and has a pedal mounting hole 177a that is formed on a free end of the right crank arm portion 177.

The left crank 152 includes a hollow left crank arm portion 185 having a pedal mounting hole 185a with the pedal 53 that is screwed on a free end of the left crank arm portion 185. The left crank 152 includes a square taper-shaped connecting hole 152a that is non-rotatably coupled to the crank axle 154 in freely attachable and removable manner. The connecting hole 52a is locked on the rotation locking part 154b. The left crank 152 is fixed on the crank axle 154 by a fastening bolt 159 that is screwed onto the female screw part 154a of the crank axle 154.

When the crank axle assembly 150 as described above is mounted on the hanger part 29, the roller members 163c and 164c of the bearings 163 and 164 are first mounted on the left and right bearing housings 160 and 161. The roller members 163c are held by a holding member that is not shown in figures by leaving a space in the circumference direction. In addition, the connecting member 162 is coupled to one of the bearing housings 160 and 161. Also, the lock nut 70 is mounted on the male screw part 160c of the bearing housing 160. The bearing housings 160 and 161 are screwed together within a certain range of torque on the female screw parts 29a and 29b of the hanger part 29 in this state. At this time, the lock nut 70 and bearing housing 160 should be screwed to achieve the closest position to the hanger part 29. Next, the crank axle 154 is inserted from the side of the bearing housing 161. The inner ring 163 a of the bearing 163 is mounted on the crank axle 154 on an axial end of the crank axle 154 that is projected from the left bearing housing 160 with the above-mentioned procedure. After the completion of mounting of the inner ring 163a, the bearing play is adjusted by turning the bearing housing 160 in the loosening direction. As explained above, when the inner ring 163a is mounted, it is necessary to slightly move the inner ring 163a to the left in the axial direction. Therefore, when the bearing play is adjusted, it is necessary to move the bearing housing 160 toward left by turning in the loosening direction as much as the inner ring 163a moves to the left when the inner ring 163a is mounted so that the roller members 163c make contact with the inner ring 163a. When the roller members 163c contact the inner ring 163a, and the adjustment of the bearing play is completed, the lock nut 70 is tightened up toward the axial end surface of the hanger part 29, and the bearing housing 160 is retained and fixed to prevent the misalignment in the axial direction. At the last stage, the left and right cranks 152 and 151 are mounted by the fastening bolts 159 with rotational phase offset by 180 degrees.

The initial adjustment of the bearing play is completed in this state. However, when the bicycle is driven over time, the adjustment of the bearing play is gradually ruined and misalignment or jounce in the axial direction will occur, which requires a readjustment of the bearing play. In such case, the lock nut 70 is first loosened. Thus, the locking of the bearing housing 160 is released and the bearing housing 160 can be turned in the loosening direction. When the bearing housing 160 is turned in the loosening direction, the left bearing housing 160 places outward pressure on the outer ring 163b of the bearing 163 in the axial direction (the left side in Figure 6). Accordingly, misalignment or jounce of the bearings 163 and 164 are reduced, and the readjustment of the bearing play can be performed. When a state is attained with no misalignment and smooth turns are achieved, the lock nut 70 is tightened toward the axial end surface of the hanger part 29. Consequently, the bearing housing 160 is retained, and the bearing housing 160 is placed in an appropriate axial position with the bearing play is adjusted.

Accordingly, similar to the first embodiment, with the second embodiment of the present invention, since the axial position of the bearing housing 160 with respect to the hanger part 29 is selectively fixed in any position by mounting the lock nut 70, the bearing play can be adjusted by using the bearing housing 160. Therefore, the adjustment of the bearings 163 and 164 by the crank arms 151 and 152 is no longer necessary, and the adjustment of the bearings 163 and 164 can be performed easily.

### THIRD EMBODIMENT

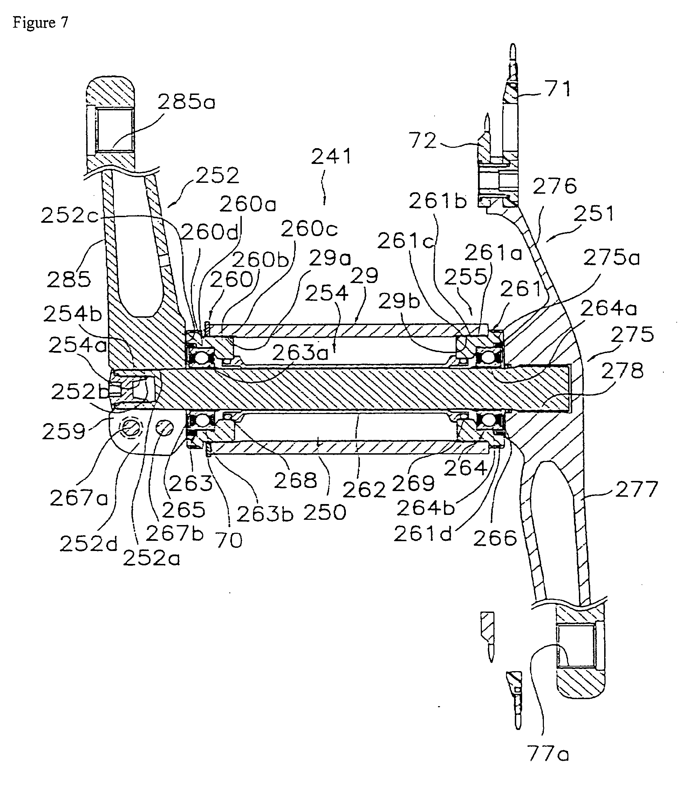

Referring now to Figure 7, a bicycle crank axle bearing assembly in accordance with a third embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

The third embodiment of the present invention is basically identical to the first embodiment except that a pair of bearing housings 260 and 261 of the third embodiment are arranged slightly differently from the bearing housings 60 and 61 of the first embodiment. More specifically, in the first (and second) embodiment, the bearing retaining sections 60a and 61a of the bearing housings 60 and 61 are axially outwardly with respect to the hanger part 29, and the bearing retaining sections 60a and 61a and the male screw parts 60c and 61 c are disposed in alignment in the axial direction. On the other hand, in the third embodiment, the bearing housings 260 and 261 are arranged so that bearing retaining sections 260a and 261 a and male screw parts 260c and 261 c formed in mounting sections 260b and 261 b of the bearing housings 260 and 261, respectively, overlap when viewed in a radial direction with respect to a crank axle 254 as shown in Figure 7.

In Figure 6, the third embodiment differs from the first embodiment only in the configuration of a front crankset 241 of the drive member. Therefore, descriptions of parts other than the front crankset 241 are omitted. The front crankset 241 basically includes a crank axle assembly 250, a right crank arm 251, a left crank arm 252, and the pedals 53 (shown in Figure 1). The right crank arm 251 is preferably fixedly coupled to the right end of the crank axle 254 by an appropriate fixing method such as caulking, bonding or welding so that the right crank arm 251 is integrally coupled to the crank axle 254. The left crank arm 252 is removably fastened to the left end of the crank axle 254. The pedals 53 are mounted to the tip or free ends of the right and left crank arms 251 and 252.

The crank axle assembly 250 preferably has the crank axle 254 rotatably supported on the hanger part 29 of the frame 11 by a bottom bracket 255 (e.g., a crank axle bearing assembly) that is fixedly mounted on the hanger part 29.

The crank axle 254 is preferably an alloy hollow pipe-shaped member that is highly rigid such as chrome molybdenum steel. The left end portion of the crank axle 254 includes a female (internal threads) screw part 254a and a plurality of external serrations 254b. The female (internal threads) screw part 254a is disposed on an inner circumferential surface of the left end portion of the crank axle 254 so that a fastening bolt 259 is screwed into the female screw part 254a to fasten the left crank arm 252. The serrations 254b is provided on the outer circumferential surface of the left end portion of the crank axle 254 to non-rotatably link the left crank arm 252 thereon.

The bottom bracket 255 includes a pair (left and right) of bearing housings (e.g., the first and second axle support members) 260 and 261, a tube-shaped connecting member 262, a pair (left and right) of bearings 263 and 264, a pair (left and right) of cover members 265 and 266 and a lock nut 70. The bearing housings 260 and 261 are screwed in from both ends of the hanger part 29. The tube-shaped connecting member 262 concentrically links the left and right bearing housings 260 and 261. The left and right bearings 263 and 264 are mounted on the left and right bearing housings 260 and 261. The left and right cover members 265 and 266 are mounted between the crank axle 254 and inner rings of left and right bearings 263 and 264. The lock nut 70 is screwed in the left bearing housing 260.

The left and right bearing housings 260 and 261 are tubular members with flanges having left and right bearing retaining sections 260a and 261 a, left and right mounting sections 260b and 261b, and left and right flange portions 260d and 261d. The bearing retaining sections 260a and 260b and are formed on the inner circumference surface of the bearing housings 260 and 261 so that the bearings 263 and 264 are retained therein, respectively. The mounting sections 260b and 261b are formed on the outer circumference surface of the bearing housings 260 and 261 and non-rotatably mounted on axial end parts of the hanger part 29. The mounting sections 260b and 261b are formed on the outer circumference surface on the circumference side of the bearing retaining sections 260a and 261a. Similarly to the first embodiment, the hanger part 29 has female screw parts 29a and 29b on the inner circumference surfaces of both right and left end portions, and the mounting sections 260b and 261 b have male screw parts 260c and 261c that are screwed in the female screw parts 29a and 29b, respectively. In order to prevent the screws from becoming loose by rotation of the cranks, the left female screw part 29a is preferably right-hand screw threads, and the right female screw part 29b is preferably left-hand screw threads. Therefore, the male screw part 260c that screws into the left female screw part 29a is preferably right-hand screw threads, and the male screw part 261 c is preferably left-hand screw threads. The flange portion 261d is disposed in contact with the right end surface of the hanger part 29. The outer circumference surfaces of the flange portions 260d and 26 1 d are arranged so that a tool can engage with the flange portions 260d and 261d.

Since the connecting member 262 is basically identical to the connecting member 62 of the first embodiment except its size, the detail description of the connecting member 262 is omitted.

The bearings 263 and 264 basically utilize the same structure as the bearings 63 and 64 of the first embodiment except for their diameters. In other words, the bearings 263 and 264 are conventional bearings, such as ball bearings or roller bearings, that have the inner rings 263a and 264a, the outer rings 263b and 264b and the roller members 263c and 264c, such as spheres or rollers, which are disposed between the inner rings 263 a and 264a and the outer rings 263b and 264b, respectively.

The lock nut 70 is basically identical to the lock nut shown in Figure 5 in the first embodiment. In other words, the lock nut 70 is preferably, for example, a flat regular-dodecagon shaped nut.

The right crank arm 251 is a gear crank that has a pair of chain rings or sprockets 71 and 72 mounted thereon in a removable manner. The right crank arm 251 includes a crank connecting part 275, a plurality of arm parts 276, and a right crank arm part 277. The crank connecting part 275 has a mounting recessed part 278 that is formed with a tube-shaped space and non-rotatably mounted on the right edge of the crank axle 254. The arm parts 276 (five arm parts 276 are provided in this embodiment) can mount the sprockets 71 and 72 on their free ends and radially extend from the crank connecting part 275. The right crank arm part 277 is fixedly coupled on the right edge of the crank axle 254 and a pedal mounting hole 277a is formed on its free end. An inner edge surface 275a in the axial direction of the connecting part 275 of the right crank arm 251 is disposed to press the inner ring 264a of the bearing 264 via the cover member 266.

Since the left and right crank arms 252 and 251 have the same configuration as the left and right crank arms 52 and 51 of the first embodiment, the detail description of the left and right crank arms 252 and 251 is omitted. In addition, in Figure 7, parts and members that are not described herein are shown with reference numerals to which 200 is added to the reference numerals shown in Figure 2. The parts and members with these reference numerals have basically the same configuration as the first embodiment.

When the crank axle assembly 250 of the present invention as described above is mounted on the hanger part 29, first, the bearings 263 and 264 and the cover members 265 and 266 are mounted on the left and right bearing housings 260 and 261. In addition, the connecting member 262 is mounted on one of the bearing housings 260 and 261. Also, the lock nut 70 is mounted on the male screw part 260c of the bearing housing 260.

In this state, the bearing housings 260 and 261 are screwed to the female screw parts 29a and 29b of the hanger part 29, respectively, with torque of a certain range. In particular, at this time, the bearing housing 261 is screwed all the way with a certain range of torque so that the bearing retaining section 261 a is abut against an axial end surface of the hanger part 29. The bearing housing 260 is then screwed all the way with a certain range of torque on the hanger part 29 while the lock nut 70 is disposed between an axial end of the hanger part 29 and the bearing retaining section 260a. Then, the lock nut 70 is turned so that the lock nut 70 abuts against the hanger part 29 to non-rotatably retain the axial position of the bearing housing 260 with respect to the hanger part 29. Accordingly, the left bearing housing 260 is retained and the axial position thereof with respect to the hanger part 29 is fixed because the connection between the bearing housing 260 and the hanger part 29 becomes hard to loosen by the lock nut 70.

Next, the gear crank arm 251 to which the crank axle 254 is fixedly coupled is inserted from the side of the bearing housing 261. The left crank arm 252 is mounted on an end of the crank axle 254 that projects axially outwardly from the left bearing housing 260. The left crank arm 252 is mounted with a rotational phase orientation that is offset by 180 degrees from the right crank arm 251.

Then, the fastening bolt 259 is screwed to the female screw part 254a of the crank axle 254, and the left crank 252 is fixed onto the crank axle 254. The crank axle 254 moves toward left in Figure 7 by tightening up the fastening bolt 259, and the inner edge surfaces 275a and 252c of the right and left cranks 251 and 252 place inward pressure on the inner rings 263a and 264a of the bearings 263 and 264 through the cover members 265 and 266. An adjustment to reduce misalignment between right and left of the crank axle 254 is performed by mounting the left crank 252 and adjusting the amount of pressure. When the adjustment of the bearing play is completed, the mounting bolts 267a and 267b of the left crank 252 are tightened up, and the left crank arm 252 is securely fixed onto the crank axle 254.

The initial adjustment of the bearing play is completed in this state. The readjustment of the bearing play is performed with the same method as in the first embodiment, where the lock nut 70 is once again loosened. Thus, the locking of the bearing housing 260 is released and the bearing housing 260 can be turned in the loosening direction. When the bearing housing 260 is turned in the loosening direction, the left bearing housing 260 places outward pressure on the outer ring 263b of the bearing 263 in the axial direction (the left side in Figure 7). Accordingly, misalignment or jounce of the bearings 263 and 264 are reduced, and the readjustment of the bearing play can be performed. When a state is attained with no misalignment and smooth turns are achieved, the lock nut 70 is tightened toward the axial end surface of the hanger part 29. Consequently, the bearing housing 260 is retained, and the bearing housing 260 is placed in an appropriate axial position with the bearing play is adjusted.

Since the bearing housings 260 and 261 are arranged such that at least part of the bearing retaining sections 260a and 261 a and the male screw parts 260c and 261 c of the bearing housings 260 and 261 overlap when viewed in the radial direction of the crank axle 254, the bearings 263 and 264 can be disposed to provide a maximum distance therebetween in the hanger part 29, and the distance between the left and right crank arms 252 and 251 and the bearings 263 and 264, respectively, can be shortened. Therefore, when the bearings 263 and 264 are disposed in the hanger part 29, the rigidity of the crank axle 254 can be improved.

In the first and third embodiments explained above, the initial adjustment of the bearing play is performed by mounting the crank arm 52 or 152. However, the adjustment of the bearing play may be performed by using the bearing housing 60 or 160.

In the first embodiment explained above, a crank axle bearing assembly for a road bike is described as an example, but a crank axle bearing assembly of this invention can be adapted to all types of bicycles or an electric bicycle such as an electric assist bicycle as well.

In the second embodiment, the right crank 151 is arranged so that it is freely attachable to and removable form the crank axle 154. However, it will be apparent to those skilled in the art from this disclosure that, similar to the first and third embodiments, the right crank 151 of the second embodiment may be integrally coupled to the right end of the crank axle 154 by an appropriate fixing method such as caulking, bonding or welding.

In the first and third embodiments, the right and left crank arms 52 and 51 or 152 and 151 restrict the bearings 63 and 64 or 163 and 164 through the cover members 65 and 66 or 165 and 166. However, the bicycle crank axle bearing assembly of the present invention can be configured and arranged so that the right and left crank arms directly restrict the bearings.

In the second embodiment of the present invention, the crank arms 152 and 151 are retained by the rotation locking parts 154b each of which has four tapered flat surfaces. However, the bicycle crank axle bearing assembly of the second embodiment can also be configured and arranged so that the crank arms are retained by providing serrations.

Moreover, although cover members for sealing the bearings 163 and 164 are not shown in the second embodiment, it will be apparent to those skilled in the art from this disclosure that such cover members can be provided to the crank axle bearing assembly of the second embodiment.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle crank axle bearing assembly adapted to rotatably couple a crank axle (54) with a pair of first and second crank arms (51, 52) to a hanger part of a bicycle frame (11), the bicycle crank axle bearing assembly comprising:
a first axle support member (60) configured and arranged to be coupled to a first axial end portion of the crank axle (54), and having a first male screw part (60c) formed on an outer circumferential surface and a first bearing retaining part (60a) formed on an inner circumferential surface, the first male screw part (60c) being configured and arranged to engage with a first female screw part (29a) formed an a first axial end of the hanger part (29);
a second axle support member (61) configured and arranged to be coupled to a second axial end portion of the crank axle (54), and having a second male screw part (61 c) formed on an outer circumferential surface and a second bearing retaining part (61a) formed on an inner circumferential surface, the second male screw part (61 c) being configured and arranged to engage with a second female screw part (29b) formed on a second axial end of the hanger part (29);
a pair of first and second bearings (63, 64) retained in the first and second bearing retaining parts of the first and second axle support members, respectively, so that axial inward movements of the first and second bearings (63, 64) are restricted by
the first and second axle support members, respectively, and axial outward movements of the first and second bearings (63, 64) are restricted by one of the crank axle (54) and the pair of the first and second crank arms; and
at least one lock nut (70) coupled to at least one of the first and second male screw parts (60c, 61 c) of the first and second axle support members (60, 61) to selectively retain an axial position of at least one of the first and second axle support members
(60, 61) provided with the at least one lock nut (70) with respect to the hanger part (29) of the bicycle frame (11).

2. The bicycle crank axle bearing assembly in accordance with claim 1, wherein the first and second bearings (63, 64) are arranged so that the axial inward movements of the first and second bearings (63, 64) are restricted by the crank axle (54).

3. The bicycle crank axle bearing assembly in accordance with claim 1, wherein the first and second bearings (63, 64) are arranged so that the axial inward movements of the first and second bearings (63, 64) are restricted by the first and second crank arms (51, 52), respectively.

4. The bicycle crank axle bearing assembly in accordance with claim 1, wherein the first and second bearing retaining sections (60a, 61a) of the first and second axle support members (60, 61) are disposed radially inwardly with respect to the first and second male screw parts (60c, 61 c) of the first and second axle support members (60, 61), respectively.

5. The bicycle crank axle bearing assembly in accordance with claim 1, wherein the first and second bearing retaining sections (60a, 61a) of the first and second axle support members (60, 61) are disposed axially outwardly with respect to the first and second male screw parts (60c, 61 c) of the first and second axle support members (60, 61), respectively.

6. The bicycle crank axle bearing assembly in accordance with claim 1, wherein each of the first and second bearings (63, 64) is arranged as a roller bearing having an outer ring (63b, 64b), an inner ring (63a, 64a) and a plurality of roller members disposed between the outer ring and the inner ring.

7. The bicycle crank axle bearing assembly in accordance with claim 6, wherein the first and second bearings (63, 64) are configured and arranged such that the axial outward movements of the inner rings (63a, 64a) of the first and second bearings (63, 64) are restricted by the crank axle (54), and the first and second axle support members (60, 61) restrict the axial inward movements of the outer rings (63b, 64b) of the first and second bearings (63, 64), respectively.

8. The bicycle crank axle bearing assembly in accordance with claim 6, wherein the first and second bearings (63, 64) are configured and arranged such that the axial outward movements of the inner rings (63a, 64a) of the first and second bearings (63, 64) are restricted by the first and second crank arms (51, 52), respectively, and the first and second axle support members (60, 61) restrict the axial inward movements of the outer rings (63b, 64b) of the first and second bearings (63, 64), respectively.

9. The bicycle crank axle bearing assembly in accordance with claim 5, wherein the first and second bearing retaining parts (60a, 61a) of the first and second axle support members (60, 61) have a larger diameter than the first and second male screw parts (60c, 61 c) of the first and second axle support members (60, 61), respectively.

10. The bicycle crank axle bearing assembly in accordance with claim 9, wherein the first and second bearing retaining parts (60a, 61a) of the first and second axle support members (60, 61) are disposed axially outwardly with respect to the first and second axial ends of the hanger part (29).

11. The bicycle crank axle bearing assembly in accordance with claim 1, further comprising a connecting member (62) that concentrically extends between the first and second axle support members (60, 61) to guide the crank axle (54) passing therethrough.

12. A bicycle crank assembly adapted to be coupled to a hanger part (29) of a bicycle frame (11), comprising:
a crank axle (54) with first and second crank arms (51, 52) non-rotatably coupled to first and second axial end portions thereof;
a first axle support member (60) coupled to the first axial end portion of the crank axle (54), and having a first male screw part (60c) formed on an outer circumferential surface and a first bearing retaining part (60a) formed on an inner circumferential surface, the first male screw part (60c) being configured and arranged to engage with a first female screw part (29a) formed an a first axial end of the hanger part (29);
a second axle support member (61) coupled to the second axial end portion of the crank axle (54), and having a second male screw part (61 c) formed on an outer circumferential surface and a second bearing retaining part (61a) formed on an inner circumferential surface, the second male screw part (61 c) being configured and arranged to engage with a second female screw part (29b) formed on a second axial end of the hanger part (29);
a pair of first and second bearings (63, 64) retained between the crank axle (54) and
the first and second bearing retaining parts (60a, 6 1 a) of the first and second axle support members (60, 61), respectively, so that axial inward movements of the first and second bearings (63, 64) are restricted by the first and second axle support members (60, 61), respectively, and axial outward movements of the first and second bearings (63, 64) are restricted by one of the crank axle (54) and the first and second crank arms (51, 52); and
at least one lock nut (70) coupled to at least one of the first and second male screw parts (60c, 61 c) of the first and second axle support members (60, 61).

13. The bicycle crank assembly in accordance with claim 12, wherein the axial inward movements of the first and second bearings (63, 64) are restricted by the crank axle (54).

14. The bicycle crank assembly in accordance with claim 12, wherein the axial inward movements of the first and second bearings (63, 64) are restricted by the first and second crank arms (51, 52), respectively.

15. The bicycle crank assembly in accordance with claim 14, wherein the first crank arm (51) is integrally coupled to the first axial end portion of the crank axle (54).

16. The bicycle crank assembly in accordance with claim 15, wherein the lock nut (70) is mounted on the second male screw part (61c) of the second axle support member (61).

17. The bicycle crank assembly in accordance with claim 13, wherein the first and second crank arms (51, 52) are freely removably coupled to the first and second axial end portions of the crank axle (54).

18. The bicycle crank assembly in accordance with claim 12, wherein each of the first and second bearings (63, 64) is arranged as a roller bearing having an outer ring (63b, 64b), an inner ring (63a, 64a) and a plurality of roller members disposed between the outer ring and the inner ring.

19. The bicycle crank assembly in accordance with claim 18, wherein the crank axle (54) restricts the axial outward movements of the inner rings (63a, 64a) of the first and second bearings (63, 64) are restricted, and the first and second axle support members (60, 61) restrict the axial inward movements of the outer rings (63b, 64b) of the first and second bearings (63, 64), respectively.

20. The bicycle crank assembly in accordance with claim 18, wherein the first and second crank arms (51, 52) restrict the axial outward movements of the inner rings (63a, 64a) of the first and second bearings (63, 64), respectively, and the first and second axle support members (60, 61) restrict the axial inward movements of the outer rings (63b, 64b) of the first and second bearings (63, 64), respectively.
